# EUROPEAN PATENT APPLICATION

(11) **EP 2 025 233 A2**
(43) Date of publication of application: **18.02.2009**
(21) Application number: 07765859.9
(22) Date of filing: 11.05.2007
(51) Int. Cl.: A22C 13/00

(54) **COLOURING GUT FOR MEAT SAUSAGE PRODUCTS AND METHOD FOR OBTAINING SAME**

(30) Priority: 11.05.2006 ES 200601214
(71) Applicant: VISCOFAN S.A., E-31007 Pamplona (ES)
(72) Inventor: REDIN BURGUETE, Maria del, Rosario, E-31007 Pamplona (ES); LONGO ARESO, Carlos, E-31007 Pamplona (ES); RECALDE IRURZUN, Jose, Ignacio, E-31007 Pamplona (ES)
(74) Representative: Carpintero Lopez, Francisco
(86) International application number: PCT/ES2007/000276
(87) International publication number: WO 2007/132043

(57) **Abstract**

The present invention relates to an artificial casing for the preparation of stuffed meat products which comprises a reducing sugar, capable of providing a pleasant golden brown colour to said stuffed meat product once heat treated. Likewise, the invention relates to a process to produce said artificial casings, the meat products produced as well as the production process thereof.

## Description

### FIELD OF THE INVENTION

The present invention relates to the field of artificial casings for the preparation of coloured stuffed meat products. More in particular, it relates to an artificial casing which comprises a suitable quantity of reducing sugar, capable of providing the stuffed meat product with a pleasant golden brown colour once heat treated. The invention also relates to a process to produce said casings, and to the meat products stuffed therein.

### BACKGROUND OF THE INVENTION

The desirable and pleasant appearance, in terms of colour, of food products in general and stuffed meat products in particular, is a requirement which is increasingly important in the food sector. One of the most highly valued colours in stuffed meat products, and in particular in the case of sausages, is brown colour, since it reminds of the actual colour produced during the processing thereof.

Various alternative methods are known whereby food and, in particular meat products, take on said brown colour. Thus, patent US 4,038,438 discloses the use of caramel as a colouring agent to impregnate tubular collagen or cellulose casings in gel state, which, after their drying, take on a permanent brown colour. Caramel contains sufficient aldehyde groups and other similar functions, which at drying temperatures of the gel, normally between 65º C and 90 ºC, cross-link the fibres constituting the tubular casing and give a fixed colour to the casing. Nevertheless, the effect of fibre cross-linking of the tubular casing has the disadvantage that in the case of being used to produce fresh sausages it deteriorates the frying properties thereof. This is due to the fact that cross-linking decreases the dilatability of the casing, which may lead to bursting when fried. Patent US 4,728,523 discloses the preparation of collagen casings with chocolate as colouring agent, alone or in combination with other colourings. Patent US 5,599,570 discloses encapsulated liquid smoke, added directly in the collagen mixture so that the components are released during the processing of the sausage.

Patent US 6,090,421 discloses an alternative method to provide products with a golden brown colour of pleasant appearance which consists of the application of an emulsion which comprises an oily phase, an aqueous phase and a browning agent which is applied by spray technique and directly adheres to the food, such as meat, a meat product or a snack, which take on a brown colour when cooked or heated. Browning agents are disclosed, for example, in patents US 5,397,582 and US 5,393,542 and generally contain a mixture of carbohydrates which have been treated by pyrolysis, heating, burning, etc.

On the other hand, in the particular case of precooked sausages, patent US 3,589,915 discloses a collagen casing wherein a meat emulsion is stuffed, which comprises fats and a binder, and furthermore may comprise spices and dextrose or corn syrup. The dextrose and the syrup contribute to the colouring of the precooked sausage when it is reheated. Nevertheless, so that by incorporating sugar in the meat emulsion of a sausage, it takes on a suitable golden brown colour, it would be necessary to add a high quantity of sugar which would give the sausage an unacceptable sweet flavour.

In a typical application of pre-cooked sausages, a meat emulsion of fresh sausage type is prepared and it is stuffed in an artificial collagen casing, which is optionally twisted to form the individual sausages; said sausages are then individually cut and fall onto conveyor belts. By means of these belts, the sausages pass through an oven, which subjects it to heat treatment sufficient for it to be cooked. Next, the sausages are transported through a cooling section, such as a quick freezing section, where they are frozen and go on to be stored in frozen (or refrigerated) state until they are consumed by the customer. Typical customers are usually communal dining halls, such as hotels, hospitals or fast-food chains, which in this way do not need to re-cook the sausage, just heat it and serve it to the end consumer. It is also possible that said sausages are sold frozen to the end consumer; they can be stored for a long period of time, and when desired, heated and directly consumed. Although this system offers practical advantages, among them the extension of the shelf-life of the heat-treated sausages, it also has some deficiencies: It is known that merely heating pre-cooked sausages before their consumption, such as heating in a microwave oven, may not give the sausage an appetizing surface colour, as is usually associated to sausages fried or baked at high temperatures, but instead they maintain the previous colour of the sausage or simply transform it into a rather unappetizing tone (US 6,090,421, col. 1, lines 5-37).

On the other hand, the use of certain sugars in the preparation of artificial casings is known. Thus, for example, patents US 3,151,990 and US 3,235,641 disclose the production of collagen casings by treatment of a collagen gel with a very diluted solution of a reducing sugar, following by heat curing of the casing, which leads to a casing with greater wet tensile strength compared to the untreated casing. Patent US 3,151,990 (col. 2, lines 11-23) mentions that is seems probable that the small quantity of reducing sugar which is added to the collagen in its wet state is absorbed, and during the strong cycle of heat curing to which the casing is subjected, a chemical cross-linking bond of the collagen is made, thus producing a casing with greater toughness and wet tensile strength, such as that needed, for example, by a sausage which is going to be hung in strings to later be cooked in an oven to produce a processed sausage, for example a "bratwurst" type of sausage. Additionally, this all increases the strength and toughness of the casing which may be useful for casings intended for processed stuffed meat products, the use of said sugars combined with the heat-hardening processing of the casing would not be desirable for casings intended to produce fresh sausages, which are cut in portions almost immediately after their stuffing, which means that they do not require high tensile strength to be hung and cooked in strings without breaking. To the contrary, in this case even said greater toughness and strength would have negative effects for the frying properties of the fresh sausages (the toughening of the casing would decrease the dilatability of the casing and would cause an unacceptably high proportion of bursting of the casing when the sausage is fried). Patent US 3,533,808 discloses the impregnation, in the case of cellulose casing designed to be peeled, with various sugars (sucrose, glucose, lactose and maltose) used in this case as peeling agents, to impregnate at least the inner surface of the casing. The quantity of sugar applied is 15-30% by weight of casing, and the sucrose and the glucose are preferred sugars for reasons of economy. The application of sugars is intended in this patent to facilitate the peeling of the casing.

Despite the various solutions existing in the state of the art, there continues to be the need to provide alternative stuffed meat products which have, or are capable of developing, a pleasant and appetizing golden brown colour.

The present invention provides an artificial casing which meets this need and which overcomes some of the drawbacks related to the aforementioned casings in the state of the art. The artificial casing provided by the present invention may be used to prepare a stuffed meat product, pre-cooked and/or fresh which have or may develop a golden brown colour which is attractive to the consumer. Said appearance and colour may be controlled in accordance with the production process of the artificial casing, or regulating, for example, the conditions of heat treatment to which said stuffed meat product is subjected. In the case of pre-cooked sausages prepared with the artificial casing of the present invention, when they reach the consumer, they have said pleasant appearance and golden brown colour. These sausages have the advantage for the consumer of having the appearance of being fried or baked, without the consumer having to fry or bake them, but simply reheat them, for example in a microwave oven. This type of pre-cooked sausage is used, typically, in communal dining halls, hospitals or fast-food chains.

Likewise, the artificial casing provided by the present invention is suitable to prepare fresh stuffed meat products which may later be cooked and take on an appetizing colour which can be regulated and varied, without the need to subject the meat products stuffed therein to additional stages by the manufacturer such as additional baths or spraying with solutions.

### OBJECT OF THE INVENTION

Therefore, one aspect of the present invention relates to an artificial casing for its use in the preparation of a stuffed meat product, characterized in that it gives the meat product a golden brown colour by heat treatment of said stuffed meat product. Said casing comprises a sufficient quantity of a reducing sugar capable of giving the product said golden brown colour by heat treatment of the meat product stuffed therein.

In another aspect, the invention relates to a process for the preparation of said artificial casing.

In another additional aspect, the invention relates to a stuffed meat product produced with said artificial casing, as well as its production process.

### DESCRIPTION OF THE INVENTION

The present invention provides an artificial casing for its use in the preparation of a stuffed meat product, characterized in that it gives said meat product a golden brown colour by heat treatment of said stuffed meat product. In a particular embodiment, said casing gives the stuffed meat product golden brown coloured marks, which cover part of said product, which may have various sizes and shapes. In a preferred embodiment said marks have the form of a logotype or are "grill marks".

The artificial casing provided by the present invention, hereinafter casing of the invention, is characterized in that it has a reducing sugar content in sufficient quantity to be able to give the meat product stuffed therein a golden brown colour after the heat treatment of the meat product. The intensity of said colour as well as its distribution over the surface of the product may vary within large margins. Advantageously, properties such as tensile strength of the artificial casing or its dilatability are not substantially affected, which is interesting, in particular, when the casing is designed for the production, for example, of fresh sausages.

The content of reducing sugar in the casing of the invention may vary within a wide margin depending on what is desired. When said sugar is homogenously distributed on the surface of the casing, said reducing sugar is typically found in a percentage between 0.01% and 15% by weight with respect to the total weight of the casing, preferably between 3% and 10% by weight, and more preferably between 5% and 8% by weight. Nevertheless, it is obvious that the percentages may vary in accordance, for example, with the total percentage of casing surface which contains the reducing sugar. In this regard, the casing may have variable quantities of reducing sugar in the different areas thereof so that after its heat treatment it has areas which taken on a more intense colour than others.

The reducing sugar of the casing of the invention may be, in principle, any reducing sugar. By way of non-limitative example the following may be cited, among others: glucose, dextrose, fructose, galactose, lactose, maltose, mannose, fucose, xylose, erythrose, threose, corn syrup, fructose-rich corn syrup, maple syrup, whey, honey, molasses, burned sugar, starch in dextrinization process and their mixtures. In a particular embodiment the reducing sugar is glucose, fructose or mixtures thereof. The reducing sugar is preferably water-soluble so that an aqueous solution can be prepared for its easy application to the casing using various methods.

The artificial casing of the invention may be of diverse nature such as collagen, cellulose or alginate or mixtures thereof. In a preferred embodiment it is collagen. In another preferred embodiment, the casing has high protein content. The colouring reaction of the casing may be produced due to reaction between the proteins of the casing and the reducing sugar present therein, or between the proteins of the stuffed meat emulsion and the reducing sugar, or even between the proteins of the casing and the emulsion with said sugar. In the case of cellulose and alginate casings or mixtures of both, the casing acts as vehicle of the reducing sugar.

The casing of the invention may additionally comprise at least one component of those conventionally used in the state of the art. Among these, we can mention, without limitative character, compounds of the group of flavourings, aromas, spices, colouring agents, pigments, preservatives, antioxidants, emulsifiers, peeling agents, and their mixtures. Said components may be included in quantities which may vary in a large margin depending on the desired characteristics of the casing.

The casing of the present invention has multiple advantages among which we can highlight its capacity to develop an attractive and natural golden brown colour after its cooking. Said colour in some cases is much more natural and pleasant than collagen casings coloured, for example, uniformly with caramel, may have. Its production is simple and less expensive than that of casings which comprise colourings. The mechanical properties of the casing of the present invention do not deteriorate, unlike the alteration undergone by other casings designed, for example, for stuffed meat products such as sausages intended to be fried, by cross-linking with sugars, as has previously been mentioned in the background of the invention, the casing of the present invention does not lead to a decrease in the dilatability of the casing which may cause bursting of the casing during frying.

The reducing sugar may be added to produce the meat product in a convenient and advantageous manner, including it in the artificial casing. In this case, a high sugar concentration is created on the surface of the stuffed meat product covered by said artificial casing, which can then react with heat to produce a high surface concentration of compounds which give a brown colour in the place where they have more effect, i.e. on the surface of the stuffed meat product instead of in the meat emulsion in general, where it would have less effect. It is also advantageous for the manufacturer of meat products in general who wants to add less quantity of sugar than that which should be added to the dough of the meat product to produce an equivalent surface concentration, which entails a significant financial saving. Less energy expenditure is also necessary, with regard to the heat treatment of the stuffed meat product to produce an equivalent golden brown coloured tone, which also involves a considerable energy saving for the producer of stuffed meat products or for the consumer.

Another advantage of the present invention lies in the fact that the distribution of the golden brown colour of the stuffed meat product produced therewith after heat treatment may be very diverse, in accordance with the manufacturer's desires. The distribution can be regular throughout the surface of the casing, which is very difficult to achieve if the addition of the sugar on the surface of the meat product is carried out with baths, since the points of contact of the meat product with the container may stay less coloured, or if it is added by spraying, since it is very difficult to spray the surface of a meat product uniformly throughout its perimeter. Nevertheless, the distribution can also be irregular if desired, creating, for example, marks with a determined form and shape, such as grill marks or logotypes.

Another advantage is that, irrespective of the distribution of reducing sugar on the casing, depending on the specific areas of the stuffed meat product which receive the heat treatment, the physical characteristics of the oven, and the composition of the meat product, a natural baked appearance can be achieved, with some areas more golden than others, such as that obtained in a typical baking process of meat products. The final appearance is more natural and more attractive for the consumer, than that which is produced with products stuffed in a coloured collagen casing with an essentially uniform caramel colour, whose appearance results more artificial.
Another advantageous aspect of the casing of the present invention is that, compared with collagen casings coloured a uniform brown colour and practically constant for all producers, the surface colour of the stuffed meat product produced with the casing of the invention may be adjusted by the processing conditions thereof, to the golden brown colour that the customer or the meat producer desires.

In the present invention, the artificial casing is not subjected to a heat-hardening process such as that described in the aforementioned patents which would have cross-linking effects, with a decrease in casing dilatability, which would be negative for the frying properties of the casing and, therefore, of a fresh product such as a fresh sausage.

Another additional advantage of the casing of the invention is that it is a stable product with respect to the evolution time, in the usual time and temperature storage conditions. At most, moderate curing is produced which does not affect the properties of the casing, which may happen with other aldehydes such as formaldehyde or glutaraldehyde, which end up modifying the frying properties of the product by cross-linking.

Sugar does not need to be added by the meat manufacturer in an additional step which may be a bath of the meat products in a solution of said compound (which may represent an additional important complication for it), instead, as it is included in the casing, it does not require any additional operation by the meat manufacturer, which is something very advantageous for it.

The labelling is an additional advantage of the casing of the present invention, which does not require the additional use of synthetic colourings (such as certified FD&C dyes) or Caramel, which would need to be listed in the meat product label. Another additional advantage is that sugars are already a typical ingredient of meat products, so that the ingredient labelling does not need to be modified.

Another additional advantage is that the meat products produced with the casing of the present invention do not need to be subjected to such intense frying to produce an equivalent colour, which would require a much greater energy cost.

In another aspect, the invention provides a process to produce the artificial casing of the invention. In a particular embodiment, the process comprises dispersing a reducing sugar in the preparation mixture of the casing and later extruding said mass in the form of artificial casing. In accordance with this particular embodiment, the sugar is homogenously distributed on the surface of the casing, it being possible to later develop, by heat treatment, a uniform golden brown colour of the stuffed meat product in said casing. The sugar can be totally dispersed in the mixture, or alternatively in part of said mixture. In this way, artificial casings can be obtained, according to the present invention, wherein the sugar is either distributed uniformly throughout the surface of the casing, or casings wherein in certain areas of the casing they have sugar and areas wherein it has no sugar. Said casing preparation method is known by persons skilled in the art who can decide on the size, the shape and the arrangement of said areas with and without sugar in accordance with the characteristics that one wants the stuffed meat product to have therein after being subjected to heat treatment. In a preferred embodiment, casings can be produced wherein areas with and without reducing sugar alternate, following the pattern or design which one wants to produce in accordance with the characteristics of colour and colour distribution of the casing. The quantity of sugar used in the mass is also variable depending on the factors of the intensity of golden brown colour which one wants the final stuffed products to take on once heat treated.

Alternatively, the casing of the invention can be prepared by immersing an extruded artificial casing, in gel phase, in a bath which comprises an aqueous solution which comprises a reducing sugar in an appropriate concentration which may be easily determined by the person skilled in the art. Said concentration is variable, as is the immersion time in the bath depending on the final concentration of sugar we want to achieve. In a preferred embodiment, said reducing sugar bath further comprises a plasticizer. Said plasticizer may be any conventional plasticizer known by a person skilled in the art used in a conventional quantity. In a preferred embodiment, said plasticizer is glycerol. In another particular embodiment, it is immersed in an extruded artificial casing, in gel phase, first in a plasticizing bath and then in a bath which comprises an aqueous solution which comprises a reducing sugar. In another particular embodiment, an extruded artificial casing which is not found in gel state is immersed in a bath which comprises an aqueous solution which comprises a reducing sugar. By immersion, homogenous distribution of sugar is achieved on the surface of the casing of the invention.

Alternatively, a process to produce the artificial casing of the invention may comprise impregnating an artificial casing. In a particular embodiment, at least one area of the surface of a pleated wrapping of an artificial casing is impregnated.

The impregnation may be performed by means of an interior liquid bubble with a solution which comprises a reducing sugar according to the technique described in patents US 3,106,471 and US 3,378,379. In another particular embodiment the impregnation is performed by spraying during the pleating with a solution which comprises a reducing sugar according to the technique cited in patent US 4,933,217. The impregnation leads to a uniform distribution of sugar on the surface of the casing.

In a particular embodiment, the casing of the invention is capable of developing marks of golden brown colour by heat treatment of the product stuffed therein. For the preparation of the artificial casing of the invention designed to develop marks, a differential impregnation can be made of the artificial casing with a solution which comprises a reducing sugar in certain areas to produce marks. In a particular embodiment, the artificial casing can be produced with uniform reducing sugar content and, additionally, to impregnate certain areas so that they have a greater concentration of reducing sugar than the rest of the casing. In another particular embodiment, the casing is differentially impregnated so that only certain areas of the casing have a reducing sugar content, and other areas have no content. In another particular embodiment, the impregnation can be performed of, at least, one area of the surface of a pleated wrapping of the artificial casing. In a preferred embodiment, the differential impregnation produces logotypes or "grill marks" after the heat treatment of the stuffed meat product.

Likewise, the differential impregnation process to produce the artificial casing of the invention can be done by printing. In a particular embodiment said printing on the artificial casing is carried out in gel stage prior to its drying.

The irregular distribution of a reducing sugar solution on the surface of the casing leads, for example, in a preferred embodiment, to bands which are later developed by heat treatment in a similar manner to golden coloured grill marks on the stuffed meat product increasing its attractiveness to the consumer.

Alternatively, the development of the golden brown colour the form of marks such as grill marks can be done by subjecting the stuffed meat product in an artificial casing, wherein sugar has previously been homogenously distributed, to a preferential heat treatment on certain areas where we want the golden brown colour to develop, or, alternatively, that we want said colour to develop more intensely in some areas.

As is gathered from the description, and from the general common knowledge of a person skilled in the art, the production of the artificial casing with a reducing sugar can be carried out using various processes, or techniques, and in different stages of the artificial casing production process.

In another additional aspect, the present invention provides a stuffed meat product in the casing of the invention. Said product, hereinafter stuffed meat product of the invention, develops a golden brown colour by heat treatment thereof. Said product has the advantage that it is not necessary to subject it to additional steps after the stuffing thereof, such as additional baths or spraying of solutions. In a particular embodiment, the stuffed meat product of the invention is a fresh stuffed meat product. In another particular embodiment said fresh stuffed meat product is a fresh sausage.

In another particular embodiment, the stuffed meat product of the invention is a pre-cooked stuffed meat product. In a particular embodiment, said stuffed meat product is a pre-cooked sausage. The pre-cooked sausage or any other pre-cooked stuffed meat product of the present invention has the advantage that it has a golden brown colour, which gives it a pleasant appearance, making it appetizing to the end consumer, without the end consumer having to bake or fry said product. The pre-cooked product has the advantage that it is only necessary to heat it using any conventional techniques such as a microwave oven to be consumed by the end consumer with the appearance of having been fried or baked. The stuffed meat product of the present invention may be pre-cooked and have golden brown coloured marks which partially cover the surface of said stuffed meat product. Said golden brown coloured marks may have various shapes and sizes depending on what is desired. In a particular embodiment, said marks are in the form of a logotype or grill marks.

The present invention provides in an additional aspect a process to produce the stuffed meat product of the invention. Said process comprises stuffing a meat emulsion in an artificial casing according to the present invention. The meat emulsion can be any meat emulsion that one wants to stuff. Optionally, the process comprises a heat treatment stage. Said heat treatment is characterized in that it is preferably performed in the substantial absence of humidity, and can be, among others, frying, oven baking, grilling or cooking by the application of infrared radiation. Said heat treatment in a particular embodiment is carried out selectively on all or part of the artificial casing depending on whether it is desired to turn all the casing golden brown or have certain areas with golden brown colour which partially cover the surface of said product. In a particular embodiment, said marks have the form of any desirable effect such as, for example logotypes or "grill marks".

Alternatively, for the suitable development of a pleasant golden brown colour, in addition to a conventional heat treatment, such a hot-water bath, steam heating or heating using a microwave oven, the stuffed meat product is additionally subjected to surface desiccation of the heated area such as evaporation in a hot-air oven, or evaporation in a infrared-heated oven, or desiccation caused by frying in hot oil. This additional treatment promotes and accelerates the Maillard reaction which is probably what causes the pleasant golden brown tone of the present invention. The conditions in each case which are more suitable for the stuffed meat product can be selected by the person skilled in the art using simple experimentation. This can achieve the greatest balance between the development of the pleasant golden brown colour and the cost of the energy or equipment necessary to achieve it, allowed by the casing of the present invention. As is shown later in the examples, the development of a pleasant golden brown colour on the stuffed meat product surface can be of variable intensity and modulable depending on the requirements of the user or manufacturer. Said intensity will depend on multiple factors, such as the sugar content in the artificial casing, the nature of the casing, the production process of the casing, the type of heat treatment to which the stuffed meat product will be subjected, the temperature and time of heat treatment, and if said treatment is selective, among others.

Persons skilled in the art can also develop golden brown coloured marks on producing a colouring of variable intensity according to the processing conditions. It can also define the intensity of the colour and even the development of the colour in defined places of the stuffed meat product, such as, for example in areas heated at the highest temperature, such as, for example, in areas with any effect or form that are desired, such as the form of "grill-marks" or logos or hot "iron" type marks of cattle ranches, etc.

Below, examples of the invention are given which are included to give a better understanding thereof and in no case should they be considered to limit the scope thereof.

### EXAMPLES

### EXAMPLE 1

### Production process of an artificial collagen casing with various proportions of dextrose

An artificial casing of collagen with 21 mm calibre was prepared, conventionally produced and similar to that described in patent US 3,535,125, and it was subjected to a plasticizing stage during the gel phase. Next, said casing was treated according to the conditions indicated in Table 1.
(1) In an additional tank which contained a 5% aqueous dextrose solution by weight.
(2) In an additional tank with dextrose 15% by weight.

A third artificial casing for purposes of comparison with the previous was not subjected to treatment with dextrose (CONTROL).

In each case, the casing was left for 1.71 seconds in the corresponding tank. The casings were then dried conventionally, without being subjected to additional heat treatment and they were processed in the form of pleated sticks.

**Table 1**

| **Reference** | **Dextrose (%)** | **Contained in casing (mg dextrose/m casing)** |
|---|---|---|
| CONTROL | 0 | 0 |
| 1 | 5 | 49.4 |
| 2 | 15 | 140 |

### Production of the stuffed meat products

The previous casings (CONTROL, **1** and **2**) were stuffed with breakfast-type meat emulsion with the following composition (% by weight with respect to the total weight of the emulsion):
Shoulder 40%; jowls 54%; water 2.8%; salt 1.7%; dextrose 0.3%: pepper 0.15% glutamate 0.1 %; nutmeg 0.1 %; colouring agent 0.1 %.
The CONTROL, **1** and **2** casings were stuffed conventionally using a Reyser Vemag HP15 stuffing machine and they were portioned in individual sausages. Said sausages were transported by conveyer belts, equipped with vibration means to unstick and order the sausages, and once ordered, they were subjected to heat treatment.

### Heat treatment

Said treatment consisted of grill-frying the sausages at 175 ºC for 15 minutes in a "Princess classic table Chef" model grill (Nova International N.V. Rillar- Aarschot, Belgium). It was observed that the sausages treated with dextrose (prepared with casings **1** and **2**) had a more golden and intense brown colour than the sausages prepared with the CONTROL casing and had a more appetizing appearance.

### EXAMPLE 2

### Production of the stuffed meat products

The previous casings of Example 1, CONTROL, **1** and **2** were stuffed with breakfast-type meat emulsion similar to that of Example 1.
The casings CONTROL, **1** and **2** were stuffed conventionally using a Reyser Vemag HP15 stuffer and they were provided in individual sausages. Said sausages were transported by conveyer belts, equipped with vibration means to unstick and order sausages, and once ordered, they were subjected to heat treatment.

### Heat treatment

Said treatment was pre-cooking in a Stein 205 Cooker oven according to the conditions indicated in Table 2. When the sausages prepared with the casing of the present invention (**1** and **2**) had a more intense golden brown surface colour than sausages prepared with the CONTROL casing.

**Table 2**

| **PHASE** | **Time (minutes)** | **Temperature** |
|---|---|---|
| Steam cooking | 3.5 | 210 ºC |
| Dry heat | 1 | 224 ºC |

### EXAMPLE 3

### Production of fried sausages which comprise an artificial collagen casing with various reducing sugars.

According to the same conditions described in Example 1, artificial collagen casings with 21 mm calibre were prepared, they were subjected in gel phase to a plasticizing tank, they were then dried and finally they were passed through the a corresponding additional tanks for 1.71 seconds, containing each type of reducing sugar as is indicated in Table 3. The casings are then processed in the form of pleated sticks.

The casings produced (CONTROL, **3**, **4** and **5**) were stuffed with an English breakfast-type meat emulsion according to the following composition:

| **INGREDIENTS** | **Kg** |
|---|---|
| Shoulder | 1.5 |
| Jowls | 1 |
| Lard | 2.4 |
| Ice | 3 |
| Bread | 1.4 |
| Soy | 0.3 |
| Starch | 0.1 |
| Spices | 0.225 |

They were fried in a EURAST 20 litre fryer with sunflower oil at 175 ºC for 3 minutes (see results in Table 3).

This example shows that various tones of intensity of golden brown colour were produced depending on the nature of the reducing sugar used in the preparation of the artificial casing of the invention (see results of the appearance in the last column of Table 3). In particular, fructose which is a monosaccharide with a reducer end produces a more intense golden brown colour than lactose, which is a disaccharide with a reducer end. Sucrose, which is not a reducing sugar, did not produce an increase in the golden colour and the tone produced was similar to that produced in a stuffed meat product produced with the CONTROL casing, i.e. produced without sugar.

**Table 3**

| **REFERENCE** | **Sugar** | **(%)** | **Saccharide type** | **Appearance** |
|---|---|---|---|---|
| CONTROL | - | - | - | Golden tone |
| 3 | Fructose | 10 | Reducing monosaccharide | Intense golden tone |
| 4 | Sucrose | 10 | Non-reducing disaccharide | Similar to control |
| 5 | Lactose | 10 | Reducing disaccharide | Golden tone less intense than **3** |

### EXAMPLE 4

A collagen casing with 21 mm calibre of Example 1 was subjected to the same process of Example 3, wherein the additional tank contained 15% dextrose.

The casing was stuffed with an English breakfast-type meat emulsion, the same as that of Example 3. The stuffed meat products produced were fried in a fryer in sunflower oil in the conditions indicated in Table 4, where the results obtained are shown.

The measurement of the colour of the fried products produced was determined with a Dr. Lange Micro Colour colourimeter, in the standard scale L*a*b*.

L* describes the degree of darkness, from a value of 0 equivalent to black to a value of 100 equivalent to white. The values of a* describe the degree of red tone, which increases as the value of a* increases. The values of b* describe the degree of yellow tone, which increases when the value b* increases.

To determine the measurement, the head of the apparatus is placed in direct contact with the surface of the sausage, and the measurement is made following the apparatus' instructions. The means of the values of 5 determinations in different points, performed once every 2 sausages, are reflected.

**Table 4:**

| Reference | Sugar | % | Frying Temperature ºC | Frying time minutes | L* | a* | b* | Appearan ce of Sausages after Frying in Fryer |
|---|---|---|---|---|---|---|---|---|
| Control | - | - | 195 | 2 | 55.95 | 9.28 | 25.68 | Golden tone |
| Control | - | - | 195 | 3 | 49.53 | 12.95 | 27.23 | |
| Control | - | - | 195 | 4 | 47.61 | 12.72 | 25.91 | |
| Control | - | - | 195 | 5 | 48.91 | 13.24 | 27.20 | |
| 8805 | Dextrose | 15 | 175 | 2 | 43.08 | 14.13 | 23.60 | |
| 8805 | Dextrose | 15 | 175 | 3 | 45.67 | 14.13 | 25.25 | |
| 8805 | Dextrose | 15 | 175 | 4 | 43.41 | 14.11 | 24.20 | |
| 8805 | Dextrose | 15 | 175 | 5 | 44.35 | 14.16 | 24.22 | |
| 8805 | Dextrose | 15 | 185 | 2 | 47.39 | 11.01 | 23.34 | |
| 8805 | Dextrose | 15 | 185 | 3 | 42.59 | 14.10 | 23.06 | |
| 8805 | Dextrose | 15 | 185 | 4 | 42.79 | 14.68 | 23.75 | |
| 8805 | Dextrose | 15 | 185 | 5 | 40.30 | 17.08 | 22.18 | |
| 8805 | Dextrose | 15 | 195 | 2 | 46.97 | 13.22 | 24.87 | |
| 8805 | Dextrose | 15 | 195 | 3 | 42.56 | 16.09 | 24.34 | |
| 8805 | Dextrose | 15 | 195 | 4 | 42.31 | 16.46 | 24.27 | |
| 8805 | Dextrose | 15 | 195 | 5 | 42.02 | 17.01 | 24.11 | |

This example shows that using the same casing, various tones of intensity of the golden brown colour can be produced, depending on the processing time and temperature applied. Therefore, it demonstrates that the golden brown colour that one want to obtain can be easily adjusted according to the requirements of the meat product or the customer, in accordance, among other variables, with the heat treatment applied. Therefore, the colour is not limited to a certain colour that would be achieved with a coloured collagen casing.

This example also shows that, with the casing of the present invention, sausages can be produced with a colour as dark as or darker after frying (the latter characterized in that they have a lower L* value), using lower temperatures or shorter frying times than in the frying performed with the control casing (not of the present invention), which would permit using more reduced frying times or temperatures to produce a comparable tone.

Despite the fact that reference has been made to specific embodiments of the invention, is it evident for the person skilled in the art that the process can undergo numerous variations and modifications, and that all details mentioned can be replaced by other technically equivalent ones, without departing from the scope of protection defined by the attached claims.

## Claims

1. Artificial casing for its use in the preparation of a stuffed meat product, **characterized in that** it gives said meat product a golden brown colour by heat treatment of said stuffed meat product.

2. Artificial casing according to claim 1 for its use in the preparation of a stuffed meat product, **characterized in that** it gives said meat product golden brown coloured marks which partially cover the surface of said meat product by heat treatment of said stuffed meat product.

3. Artificial casing according to claim 2, **characterized in that** said marks are in the form of logotypes or "grill marks".

4. Artificial casing according to any of claims 1 to 3 for its use in the preparation of a stuffed meat product, **characterized in that** it comprises a reducing sugar, which gives said meat product a golden brown colour by heat treatment of said stuffed meat product.

5. Artificial casing according to claim 4 for its use in the preparation of a stuffed meat product, **characterized in that** it comprises a reducing sugar in a percentage between 0.01% and 15% by weight with respect to the total casing weight, which gives said meat product a golden brown colour by heat treatment of said stuffed meat product.

6. Artificial casing according to claim 5, **characterized in that** it comprises a reducing sugar in a percentage between 3% and 10% by weight with respect to the total casing weight.

7. Artificial casing according to claim 6, **characterized in that** it comprises a reducing sugar in a percentage between 5% and 8% by weight with respect to the total casing weight.

8. Artificial casing according to any of claims 4 to 7, **characterized in that** the reducing sugar is selected from glucose, dextrose, fructose, galactose, lactose, maltose, mannose, fucose, xylose, erythrose, threose, corn syrup, fructose-rich corn syrup, maple syrup, whey, honey, molasses, burned sugar, starch in dextrinization process and their mixtures.

9. Artificial casing according to claim 8, **characterized in that** the reducing sugar is glucose, fructose or mixtures thereof.

10. Artificial casing according to any of claims 1 to 9, **characterized in that** it is made of collagen, or of cellulose, or of alginate or of mixtures thereof.

11. Artificial casing according to claim 10, **characterized in that** it is made of collagen.

12. Artificial casing according to any of claims 1 to 11, **characterized in that** it additionally comprises at least one component selected from the group of flavourings, aromas, spices, colouring agents, pigments, preservatives, antioxidants, emulsifiers, peeling agents, and their mixtures.

13. Process to produce an artificial casing according any of claims 1 to 12, **characterized in that** it comprises dispersing the reducing sugar in the preparation mixture of the casing and later extruding said mixture in the form of artificial casing.

14. Process to produce an artificial casing according to claim 13, **characterized in that** it comprises dispersing a reducing sugar on part or all of the preparation mixture of the casing.

15. Process to produce an artificial casing according to any of claims 1 to 12, **characterized in that** it comprises immersing an extruded artificial casing, in gel phase, in a bath which comprises an aqueous solution which comprises a reducing sugar.

16. Process according to claim 15, **characterized in that** said bath further comprises a plasticizer.

17. Process to produce an artificial casing according to claim 15, **characterized in that** it comprises immersing an extruded artificial casing, in gel phase, in a plasticizing bath and later in a bath which comprises an aqueous solution which comprises a reducing sugar.

18. Process to produce an artificial casing according to any of claims 1 to 12, **characterized in that** it comprises immersing an extruded artificial casing in a bath which comprises an aqueous solution which comprises a reducing sugar.

19. Process to produce an artificial casing according to any of claims 1 to 12, **characterized in that** it comprises impregnating an artificial casing with a solution which comprises a reducing sugar.

20. Process to produce an artificial casing according to claim 19, **characterized in that** the impregnation is performed by means of an interior liquid bubble with a solution which comprises a reducing sugar.

21. Process to produce an artificial casing according to claim 19, **characterized in that** the impregnation is performed by spraying during the pleating with a solution which comprises a reducing sugar.

22. Process to produce an artificial casing according to claim 19, **characterized in that** the impregnation is differentially performed on an artificial casing with a solution which comprises a reducing sugar in certain areas to produce marks.

23. Process to produce an artificial casing according to claim 22, **characterized in that** it includes the impregnation of at least one area of the surface of a pleated wrapping of the artificial casing.

24. Process to produce an artificial casing according to claim 22, **characterized in that** the differential impregnation is in the form of logotypes or "grill marks".

25. Process to produce an artificial casing according to claim 22, **characterized in that** the differential impregnation is performed by printing.

26. Process to produce an artificial casing according to claim 25, **characterized in that** the differential impregnation is performed by printing on the artificial casing in gel state prior to its drying.

27. Stuffed meat product in an artificial casing according to any of claims 1 to 12.

28. Stuffed meat product in artificial casing according to claim 27, **characterized in that** it has a golden brown colour.

29. Stuffed meat product according to claims 27 and 28, **characterized in that** it is a fresh stuffed meat product.

30. Stuffed meat product according to claim 29, **characterized in that** said fresh stuffed meat product is a fresh sausage.

31. Stuffed meat product according to claims 27 and 28, **characterized in that** it is a pre-cooked stuffed meat product.

32. Stuffed meat product according to claim 31, **characterized in that** said pre-cooked stuffed meat is a pre-cooked sausage.

33. Stuffed meat product in artificial casing according to any of claims 28, 31 and 32, **characterized in that** it has golden brown coloured marks which partially cover the surface of said stuffed meat product.

34. Stuffed meat product in artificial casing according to claim 33, **characterized in that** said golden brown coloured marks are in the form of logotypes or grill marks.

35. Process to produce a stuffed meat product according to claims 27 to 34, which comprises stuffing a meat emulsion in an artificial casing.

36. Process to produce a stuffed meat product according to claim 35, **characterized in that** it comprises a heat treatment stage.

37. Process according to claim 36, **characterized in that** said heat treatment is **characterized in that it** is carried out in the substantial absence of humidity.

38. Process according to claim 37, **characterized in that** said heat treatment is selected from frying, oven baking, grilling, cooking by applying infrared radiation.

39. Process according to any of claims 36 to 38, **characterized in that** said heat treatment is selectively performed on the casing, so that the areas with the golden brown colour partially cover the surface of said product.

40. Process according to claim 39, **characterized in that** the golden brown colour forms logotypes or "grill marks".
